# EUROPEAN PATENT APPLICATION

(11) **EP 2 194 089 A1**
(43) Date of publication of application: **09.06.2010**
(21) Application number: 08425774.0
(22) Date of filing: 05.12.2008
(51) Int. Cl.: C08J 11/06, B03B 5/28, B29B 17/02, C08L 67/02

(54) **Additive for improving the separation of polyethlene terephtalate and polyethylene**

(71) Applicant: Macdermid Italiana S.R.L., 13900 Biella (IT)
(72) Inventor: Terno, Renato, 26900 Lodi (IT); Pozzi, Gianluca, 20010 Vittuone (MI) (IT)
(74) Representative: Faggioni, Marco

(57) **Abstract**

Additive for helping the separation of polyethylene terephtalate and polyethylene, to be added to the basins where the ground waste is washed and comprising an anti-foam component and an emulsifier are described, wherein the anti-foam component ranges between 1 wt.% and 15 wt.% and the emulsifier ranges between 3 wt.% and 60 wt.%. Optionally, such additive further include from 5 wt.% to 20 wt.% of organic acids. Also a process for the separation of PE and PET is disclosed, wherein the separation is carried out in basins, taking advantage of the different densities of the plastic materials, using additive according to this invention.

## Description

This invention relates to an additive for improving the separation of polyethylene terephtalate and polyethylene, particularly useful in processes for recycling plastic materials.

Waste production and ecological consciousness are increasing simultaneously. Both facts have resulted in an increase in the use of recyclable wastes, in order to save money, not to produce toxic gases and to save energy. Waste recycling has become rather important also in the field of plastic materials, which once were not completely recyclable. Nowadays, most important plastic materials can be recycled in a relatively simple way.

However, waste recycling entails the problem of the complete separation of the particular matter to be recycled from the other materials contained in the waste. This is, first of all, accomplished through collection at the source, by forcing people to divide wastes according to their composition. Therefore, it is usual to collect a dry fraction of general wastes, a moist fraction (usually food wastes), paper, aluminium and plastics, glass (sometimes dark glass and light glass are further separated). This separated collection is presently widespread in Italy and in Europe. Unfortunately, results are not always the ones expected by waste handlers. Indeed, some people do not care sufficiently about the separation. Sometimes, people cannot even realise the difference between the different kinds of waste.

It has proven necessary to introduce a further separation step, after the collection and before feeding the recycling apparatus. Such separation necessarily entails further costs, which are the higher the more complicated the further separation is.

The problem of further separation is particularly important in the case of plastic materials. Most bottles are made either of polyethylene terephtalate or of polyethylene. The said materials are apparently very similar and a complete separation has proven not realistic. This is a serious matter for recyclers, since the admixture of polyethylene terephtalate (PET) even with small amounts of polyethylene (PE) results in recycled PET becoming slightly yellow, so that it could be employed only for the production of coloured bottles, having a lower price.

The most common process for separating PET from PE is connected with the different density of the two materials, so that they float to a different degree.

Italian patent application no. MI98A 000500 already dealt with this problem, proposing an additive which can increase the difference in floating properties, so as to facilitate separation. However, the reported composition is able to provide the desired effect only with neutral or quasi-neutral pH, whereas it would be advisable to work under acidic conditions, in order to optimise process parameters.

All the above problems are solved by this invention, which refers to an additive for improving the separation by differential floating of ground wastes of polyethylene terephtalate and polyethylene in a slurry of the kind of the kind comprising an anti-foam agent and an emulsifier, **characterised in that** the anti-foam agent ranges between 1 wt.% and 15 wt.% and the emulsifier ranges between 3 wt.% and 60 wt.%.

As above stated, according to this invention, the additive for helping the separation of polyethylene terephtalate and polyethylene comprise between 1 wt.% and 15 wt.% of an anti-foam component. Preferably, the anti-foam component is chosen among oxygenated compounds. Among such oxygenated compounds, one or more compounds chosen among polysiloxanes, organic polysiloxanes, mixed condensation products of ethylene oxide and propylene oxide are preferred. Particularly preferred are polysiloxanes and organic polysiloxanes.

Moreover, the additive for helping the separation of polyethylene terephtalate and polyethylene comprise between 3 wt.% and 60 wt.% of emulsifiers. By the concept of "emulsifier", emulsifiers and surfactants are understood. Non-ionic and anionic surfactants are preferred as emulsifiers. Particularly preferred are fatty acid esters, sulfonates, phosphate esters, fatty alcohol ethoxylate and/or propoxylate, alkyl polyglucosides, solfosuccinates, lauryl ether sulphates, fatty acid soaps.

The additive according to this invention may optionally include from 5 wt.% to 20 wt.% of organic acids. Particularly preferred are phosphonic acids, carboxylic acids (acetic acid, propionic acid, butyric acid, caprylic acid, oxalic acid, malonic acid, succinic acid, citric acid, lactic acid, carballylic acid, glycolic acid), alkyl aryl sulfonic acids.

Plastic wastes, coming from collection and subsequent selection, are generally divided into groups, depending on their colours. In a first step, plastic wastes undergo a pre-washing process. Such coarse pre-washing is carried out with a basic solution, generally containing sodium hydroxide. This step is useful for removing most labels.

During a subsequent step, a separation is carried out, in order to remove non recyclable plastics (like PVC for instance). The obtained product (PE + PET) is ground, in order to get small-sized flakes, which are washed in basic conditions and subsequently rinsed with water. The obtained flakes are suspended in a basin containing water, to which the additive according to this invention is added. The addition results in a solution containing from 0.1 to 20 g/l of the inventive additive, at a temperature ranging from 10 to 50 °C, with a pH ranging from 3 to 9 and resulting in a surface tension of 20 to 40 mN.

Whereas in the past the process was carried out under strongly basic conditions, the additive according to this invention make it possible to work under acidic conditions, preferably from pH 3 to pH 7. Under such conditions, salt residues on the PET surface can be neutralised, so as to result in better qualitative performance of the end product.

PE and PET have different density. The additive according to this invention increase the difference in densities, so that one species will float and the other one will sink. In this way, the two plastics are separated particularly fast and accurately. EXAMPLE

A separation process was carried out on mixed wastes containing PET and PE. PE in PET was less than 10 ppm. The treatment carried out by using an anti-foam agent containing a silicone emulsion induced the formation of organic residues on the chips. Such residues originate from the difficulty in rinsing the additive in the steps subsequent to the float process. The use of the additive according to this invention allows to lower the organic residues by 7 wt.%.

## Claims

1. Additive for improving the separation by differential floating of ground wastes of polyethylene terephtalate and polyethylene, in a slurry, comprising an anti-foam agent and an emulsifier, **characterised in that** the anti-foam agent ranges between 1 wt.% and 15 wt.% and the emulsifier ranges between 3 wt.% and 60 wt.%.

2. Additive as claimed in claim 1, **characterised in that** the anti-foam component is chosen among oxygenated compounds.

3. Additive as claimed in claim 2, **characterised in that** such oxygenated compounds are chosen among polysiloxanes, organic polysiloxanes, mixed condensation products of ethylene oxide and propylene oxide.

4. Additive as claimed in any previous claim, **characterised in that** the anti-foam component is chosen in the group consisting of polysiloxanes and organic polysiloxanes.

5. Additive as claimed in any previous claim, **characterised in that** such emulsifiers are non-ionic and/or anionic surfactants.

6. Additive as claimed in claim 5, **characterised in that** the said emulsifiers are chosen from the group comprising fatty acid esters, sulfonates, phosphate esters, fatty alcohol ethoxylate and/or propoxylate, alkyl polyglucosides, solfosuccinates, lauryl ether sulphates, fatty acid soaps.

7. Additive according to any previous claim, **characterised in that** they further include from 5 wt.% to 20 wt.% of organic acids.

8. Additive as claimed in claim 6 or 7, **characterised in that** such organic acids are acetic acid and/or propionic acid and/or butyric acid.

9. Process for the separation of PE and PET, wherein the separation is carried out in basins, taking advantage of the different densities of the plastic materials, **characterised in that** additive according to any previous claim are added to the water contained in the basin.

10. Process as claimed in claim 9, **characterised in that** the solution in the basin contains from 0.1 to 20 g/l of the additive according to any claim 1 to 9.

11. Process as claimed in any claim 9 and 10, **characterised in that** the separation is carried out at a temperature ranging from 10° to 50°C, with a pH ranging from 3 to 9 and resulting in a surface tension of 20 to 40 mN.
